# EUROPÄISCHE PATENTANMELDUNG

(11) **EP 0 619 667 A1**
(43) Veröffentlichungstag der Anmeldung: **12.10.1994**
(21) Anmeldenummer: 94105325.8
(22) Anmeldetag: 06.04.1994
(51) Int. Cl.: H04L 29/06

(54) **Verfahren zum Zugriff auf Adressmerkmale von Kommunikationsteilnehmern mit einem ersten Adress Bereich, beim Versenden von Datenpaketen**

(30) Priorität: 06.04.1993 DE 4311291
(71) Anmelder: SIEMENS AKTIENGESELLSCHAFT, D-80333 München (DE)
(72) Erfinder: Dankert, Uwe, D-81379 München (DE); Storn, Rainer, Dr., D-85551 Kirchheim (DE)

(57) **Zusammenfassung**

Verfahren zum Zugriff auf Adreßmerkmale von Kommunikationsteilnehmern mit einem ersten Adreß-Bereich, beim Versenden von Datenpaketen

Mit der Erfindung wird ein Verfahren beschrieben, mit dem schnell auf Adreßmerkmale, insbesondere von Datenpaketen zugegriffen werden kann. Das Verfahren macht sich zunutze, daß Leistungsmerkmale der Kommunikationsverbindung in Form von Adressen in Tabellen abgelegt sind, die nacheinander durchsucht werden müssen.

Ein großer Adreßbereich aus dem nur eine Teilmenge von Adressen verwendet wird, wird auf einen Adreßbereich, welcher so groß ist wie die Teilmenge der verwendeten Adressen, komprimiert. Dadurch erhält man verkleinerte Adressen. Da je Adreßeintrag mehrere Tabellen durchsucht werden müssen, besteht ein zweiter Schritt des erfindungsgemäßen Verfahrens darin, daß aus dem komprimierten Adreßbereich heraus über Offsets unterschiedliche zu überprüfende Tabellen angesprungen werden.

Durch das erfindungsgemäße Verfahren wird die Kommunikationslast für den Adreßtransfer vermindert und im Vergleich zu einer Hash-Adressierung wird eine verkürzte Rechenzeit erzielt.

## Beschreibung

Bei Kommunikationsverbindungen sind insbesondere bei deren Auf- und Abbau verschiedenste Überprüfungen durchzuführen. Diese Überprüfungen beziehen sich insbesondere auf Vereinbarungen zwischen einem Kommunikationsteilnehmer und einem Kommunikationsdienste-Anbieter.

Solche Merkmale von Kommunikationsverbindungen können beispielsweise sein:
- zeitabhängige Benutzungstarife
- zulässige Empfängeradressen
- zulässige Teilnehmergruppen von Kommunikationsverbindungen
- gemeinsam adressierbare Empfängergruppen
Besonders beim Vermitteln und Versenden von Datenpaketen erfolgt sozusagen ein ständiger Auf- und Abbau der Verbindung.

In den Datenpaketen eines Datenvermittlungssystems sind deshalb mehrere Adressen enthalten. Ein Vermittlungsrechner, welcher ein Datenpaket verarbeitet, muß diese Adressen üblicherweise auf eine Vielzahl von Bedingungen, wie oben angedeutet, überprüfen. Solche Überprüfungen werden im allgemeinen über Tabellenzugriffe realisiert. In diesen Tabellen sind zu den einzelnen Adressen entsprechende Adreßmerkmale enthalten.

Je mehr solche Tabellen existieren, desto öfter muß zu einer bestimmten Adresse z.B. Sendeadresse oder Empfängeradresse der passende Eintrag in der jeweiligen Tabelle gefunden werden. Die Adresse selbst stellt hierbei einen sog. Suchschlüssel dar. Der zu dem jeweiligen Suchschlüssel passende Eintrag in einer Tabelle enthält neben weiteren Informationen im allgemeinen den Suchschlüssel selbst, um überprüfen zu können, ob der zur Suche verwendete Schlüssel und jener des Tabelleneintrags übereinstimmen, d.h. ob der richtige Tabelleneintrag angesprochen wurde. Vor allem, wenn solche Adreßsuchvorgänge häufig vorkommen, wie es in Datenvermittlungsrechnern der Fall ist, ist es wünschenswert, daß die Suchvorgänge möglichst schnell ablaufen.

Eine bekannte Lösung zum Adressieren von Tabellen stellt z.B. das Hashing dar. Der Suchschlüssel wird hier direkt als Argument einer Hash-Funktion verwendet, die im Idealfall direkt die gesuchte Speicherstelle der Tabelle als Ergebnis liefert. In diesem Fall wäre der Suchschlüssel unter der Adresse abgespeichert. Dieses Verfahren ist im allgemeinen sehr schnell, manchmal aber doch nicht schnell genug, da die Berechnung der Hash-Funktion mittels Software aufwendig ist. Besonders dann, wenn viele Tabellen existieren, müssen dementsprechend viele Hash-Funktionsberechnungen durchgeführt werden, was zu einer nicht unbeträchtlichen Gesamtrechenzeit führt.

Eine weitere Möglichkeit zum Auffinden von Tabelleneinträgen stellt die Binärsuche dar. Bei ihrer Anwendung erreicht man eine definierte Obergrenze für die Suchzeit. Sie setzt aber eine geordnete Tabelle voraus und ist daher bei Tabellen-Updates problematisch. Im allgemeinen ist sie nicht so schnell wie das Hashing, nutzt aber den zur Verfügung stehenden Speicherplatz besser aus.

Eine weitere Möglichkeit stellt die Direkt-Adressierung dar. Hierbei wurde der Schlüssel direkt als Adresse verwendet. Dieses Verfahren ist damit das schnellste Software-Adressierungsverfahren überhaupt. Man benötigt jedoch viel Speicherplatz und nutzt diesen nur unvollständig aus. Dieses gilt insbesondere, wenn aus einem großen Adreßbereich nur eine beschränkte, wesentlich kleinere Teilanzahl von Adressen Verwendung findet.

Bei einer 64Bit breiten CCITT E.164 - Adresse für sowohl Sendeals auch Empfängeradresse würden für eine Tabelle 2⁶⁴ Einträge benötigt, obwohl bei einer Vermittlungsanlage möglicherweise davon nur 2048 Adressen verwendet werden (bei einem 32Bit breiten Eintrag pro theoretisch möglicher Adresse würde dies einen Speicher der Größe 7,2 x 10¹⁰ Gbyte erfordern, von denen nur 8 kbyte gefüllt wären).

Die der Erfindung zugrundeliegende Aufgabe besteht darin, ein schnelles Zugriffsverfahren auf in Tabellen abgelegte Adreßmerkmale von Kommunikationsverbindungen anzugeben.

Diese Aufgabe wird gemäß den Merkmalen des Anspruchs 1 gelöst.

Weiterbildungen der Erfindung ergeben sich aus den Unteransprüchen.

Das erfindungsgemäße Verfahren nutzt vorteilhaft aus, daß mit einem Kunden vereinbarte Leistungsmerkmale in wiederkehrender Reihenfolge abgefragt werden und die Anzahl dieser Leistungsmerkmale bekannt ist. Diese Merkmale sind somit in einer feststehenden Anzahl von Tabellen abgelegt und müssen in wiederkehrender Folge ständig für jedes Datenpaket neu abgefragt werden. In vorteilhafter Weise gibt das erfindungsgemäße Verfahren hierzu eine Lösung an. Zum einen wird der große zulässige Adreßbereich auf einen kleinen Adreßbereich mit direkt benachbarten Adressen komprimiert. Zum anderen erfolgt die Tabellensuche über Offsets von den Adressen des verkleinerten Adreßbereichs. Falls die direkte Zuordnung über eine Hash-Funktion durchgeführt wird, erhält man eine vorteilhafte Kombination aus einer Hash-Funktion-Adressierung und einer Direkt-Adressierung. In Abhängigkeit von der Größe der Zahl der Tabellen wird über die Direkt-Adressierung ein größerer Geschwindigkeitsvorteil erzielt.

Weiterhin wird in vorteilhafter Weise durch die Verkleinerung des Adreßbereichs das Kommmunikationsaufkommen für die Adressierung vermindert. Da so beispielsweise statt 64 nur 11Bit breite Datenworte durchsucht werden müssen, erhält man schneller das Ergebnis der Datensuche.

Weiterhin kann man das erfindungsgemäße Verfahren beschleunigen, indem man in den Tabellen nicht die Adressen des ersten Adreßbereichs abspeichert, sondern die Adressen des zweiten Adreßbereiches, da in vorteilhafter Weise Suchaktionen wegen der verkleinerten Adressen kürzer dauern.

Wie erfindungsgemäß vorgesehen, erhält man in vorteilhafter Weise eine weitere Geschwindigkeitsbeschleunigung, wenn man das Vorhandensein einer Adresse in der Tabelle durch ein Bit kennzeichnet. Nun muß nicht mehr das Vorhandensein einer Adresse, sondern nur noch ein gesetztes Bit bei einer Tabellensuche überprüft werden. Mehrere vorhandene Adressen werden dann beispielsweise durch ein Bitwort angezeigt.

Besonders vorteilhaft eignet sich das erfindungsgemäße Verfahren für den Einsatz in Kommunikationsverbindungen in Verbindung mit der Überprüfung von Zugangsberechtigungen. Mit dem erfindungsgemäßen Verfahren kann eine beschleunigte und eine sichere Abwicklung von Datenkommunikation gewährleistet werden.

Weiterhin kann man mit dem erfindungsgemäßen Verfahren Datenpaketvermittlungen beschleunigen, da dort häufig Überprüfungen von Paketadressen und Empfängeradressen erforderlich sind.

Im folgenden wird die Erfindung anhand von Figuren weiter erläutert.
Figur 1 zeigt ein Beispiel eines Datenpaktes.
Figur 2 zeigt Beispiele von Suchschlüsseln in Verbindung mit Tabellen und Überprüfungsaktionen.
Figur 3 zeigt ein Beispiel des erfindungsgemäßen Adressierungsverfahrens.
Figur 4 zeigt ein Beispiel zur bitweisen Kennzeichnung von Adresseinträgen in Tabellen.

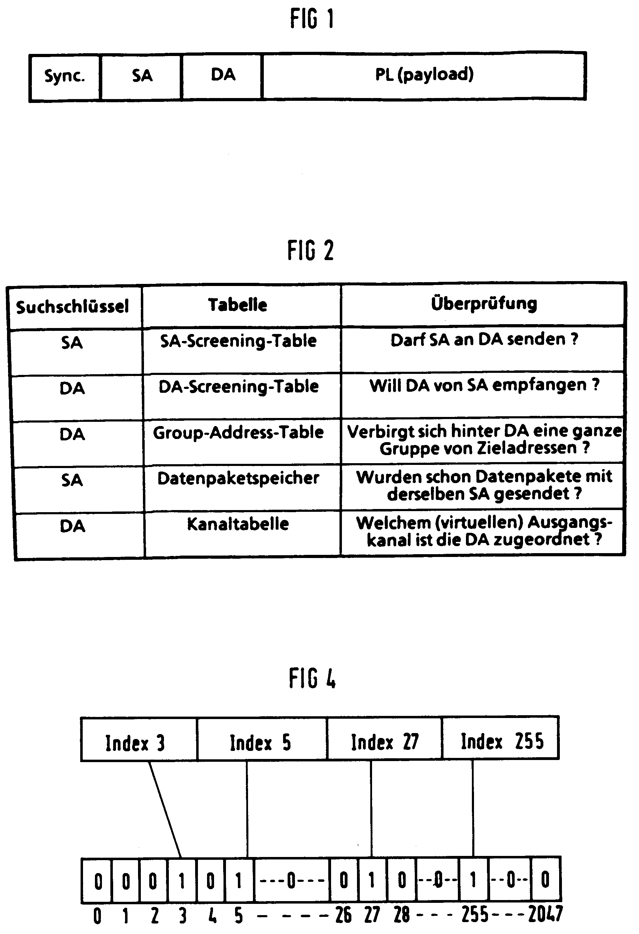

In Figur 1 ist ein Beispiel-Datenpaket gezeigt, wie es beim erfindungsgemäßen Verfahren Verwendung finden kann. Dargestellt sind eine Synchronisation Sync, eine Sendeadresse SA und eine Zieladresse DA. Des weiteren werden die Nutzdaten PL gezeigt. Erfindungsgemäß ist es vorgesehen, mit den Adressen SA und DA verschiedene Überprüfungen durchzuführen. Hierzu werden die Adressen SA und DA nach dem erfindungsgemäßen Verfahren von beispielsweise 64Bit auf 11Bit reduziert. Hierdurch wird bei einer begrenzten Kommunikationskapazität einer Kommunikationseinrichtung der Datenaustausch für die Adressierung beschleunigt, da statt
64Bit-Adressen nun nur noch 11Bit-Adressen übertragen werden müssen. Des weiteren wird die Rechenzeit für Suchvorgänge verkürzt, da eine Suche nach 11Bit-Adressen schneller abläuft wie nach 64Bit-Adressen.

Figur 2 zeigt in Tabellenform Beispiele für die Verwendung von Sende- und Empfangsadressen in Tabellen und von damit verbundenen Überprüfungen. Die Sendeadresse wird z.B. in einer SA - Screeening Table gefuhrt. Dort wird dann für jede Sendeadresse überprüft, ob diese Adresse eine bestimmte Empfängeradresse ansprechen darf. Diese Screening Tabelle existiert auch für die Empfängeradresse und kennzeichnet, welcher Empfänger von welcher Sendeadresse empfangen will. Weiterhin können beispielsweise group adress tables existieren. Darin sind Empfängeradressen enthalten, die einer Gruppe zugehörig sind. So kann auf einfache Weise ein größerer Empfängerkreis durch eine Adresse adressiert werden.

Weiterhin können beispielsweise Datenpaketspeicher vorgesehen sein, die daraufhin überprüft werden, ob schon Datenpakete mit derselben Sendeadresse SA gesendet wurden. Zusätzlich kann beispielsweise eine Kanaltabelle vorgesehen sein, in welcher DA daraufhin überprüft wird, welchem virtuellen Ausgangskanal sie zugeordnet ist.

Dies ist keine abschließende Aufzählung von Tabellen, sondern es können noch je nach Vereinbarung mit einem Kommunikationskunden unterschiedlichste weitere Überprüfungen vorgesehen sein. Es soll hiermit nur gezeigt werden, daß das erfindungsgemäße Verfahren immer besser greift, je mehr Tabellen pro Sende- bzw. Empfangsadresse angesprochen werden müssen. Weil mit der Tabellenanzahl auch die Zahl der direkt adressierbaren Tabellen steigt, wird der Rechenaufwand für die Adreß-Transformation in Relation zur Direkt-Adressierung immer geringer. Somit erreicht man einen Geschwindigkeitsvorteil gegenüber beispielsweise dem Einsatz ein Hash-Verfahrens.

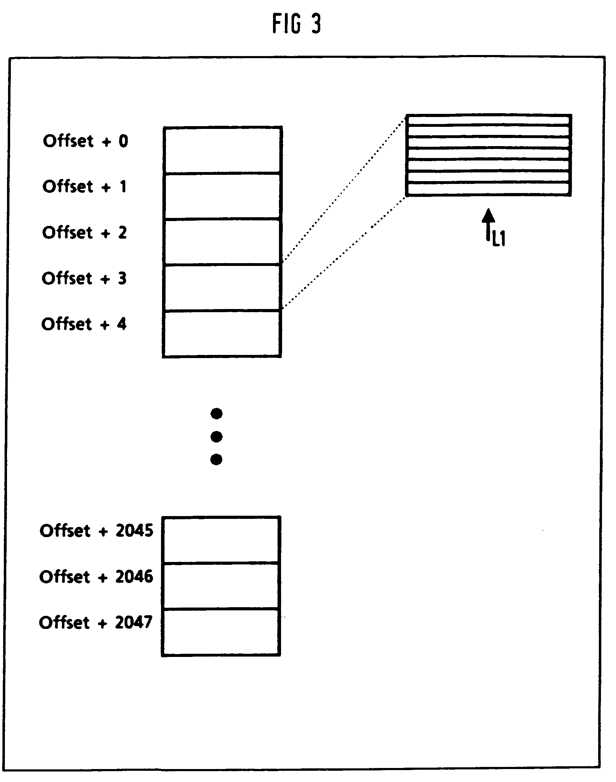

Figur 3 zeigt ein Beispiel für eine Adressierung einer Tabelle mit dem erfindungsgemäßen Verfahren. In diesem Beispiel sind 2048 Tabellen Einträge (0 bis 2047) vorgesehen. Diese Tabellen-Einträge können beispielsweise Speicheradressen eines Hardware-Speichers bezeichnen. Diese Speicher sind mit ihren Nummern und dem Offset gekennzeichnet. Mit dem strichpunktierten Linien ist der Verweis auf eine Liste L1 gekennzeichnet, welche beispielsweise die einzelnen Leistungsmerkmale bzw. in Verbindung mit einer bestimmten Speicheradresse zu behandelnde Adressen kennzeichnet. Bei dem hier dargestellten Speicherbereich kann es sich z.B. um eine in Figur 2 besprochene Tabelle handeln. Diese Tabelle enthält nun verschiedene Sende- und Empfangsadressen. Der Offset charakterisiert den Adreß-Offset von der zweiten Adresse. Für jede Tabelle ist erfindungsgemäß vorgesehen, daß ein anderer Offset festgelegt wird. Soll nun beispielsweise ein solcher Tabelleneintrag nach dem erfindungsgemäßen Verfahren gefunden werden,
wird wie folgt vorgegangen: Zunächst wird aus der 64Bit-Adresse des möglichen Adreßraums über beispielsweise eine Hash-Funktion ein Speicherbereich erzeugt, der nur noch wie beispielsweise hier in diesem Beispiel 2048 Adressen enthält. Jede angesprochene 64Bit-Adresse wird nun genau einer dieser 2048 Adressen zugeordnet. Nachdem die zweite Adresse des erfindungsgemäßen Verfahrens bekannt ist, erfolgt über Offsets der Ansprung von verschiedensten Tabellen, die bezüglich der Sende- und Empfangsadressen durchsucht werden sollen. In jeder Tabelle ist für jede zweite Adresse ein entsprechender Leistungsmerkmal-Katalog vorhanden. Das heißt, je nach Darstellungsweise in der Tabelle sind verschiedene Sende- und Empfangsadressen oder auch weitere Merkmale enthalten. Fur die erste Adresse wird z.B. über einen Offset die SA Screening Table angesprochen und über einen weiteren Offset die DA Screening Table und über einen dritten Offset die group adress table. Dieser Zugriff auf die unterschiedlichen Tabellen erfolgt über die Offsets sukzessive und es wird dafür keine weitere Rechenzeit benötigt. Dies hat den Vorteil, daß das Verfahren sehr schnell durchgeführt werden kann.

Figur 4 zeigt ein Beispiel, wie die Suche nach den in Tabellen eingetragenen Adressen beschleunigt werden kann. Die Adreßeinträge für die Adressen 3, 5, 27 und 255 sind mit Index3, Index 5, Index27 und Index255 bezeichnet. Beispielsweise sei dieser Eintrag in der SA Screening Table enthalten. Das heißt die vier Adressen 3, 5, 27 und 255 sind Adressen, an welche die Adresse senden darf, für die dieser Tabelleneintrag gültig ist. Man kann nun das Suchverfahren in der SA Screening Table beschleunigen, indem man für den gesamten Speicherbereich ein 2048Bit breites Wort vorsieht, die entsprechenden Bits an den Stellen für die zulässigen Adressen setzt und die anderen Bits bei 0 beläßt. In diesem Fall bedeutet dies, daß das 4., 6., 28. und 256. Bit in diesem 2048Bit breiten Wort gesetzt sind und daß die anderen Bits 0 sind.

Diese Darstellungsweise hat den Vorteil, daß man für jede Adreßkonfiguration ein anderes Wort erhält und daß man damit sehr schnelle Vergleiche durchführen kann.

## Patentansprüche

1. Verfahren zum Zugriff auf Adreßmerkmale von Kommunikationsteilnehmern mit einem ersten Adreß-Bereich, beim Versenden von Datenpaketen mit folgenden Merkmalen:
a) jedem Kommunikationsteilnehmer entspricht mindestens eine erste Adresse,
b) die Adreßmerkmale sind in einem adressierbaren Speicher abgelegt,
c) aus dem ersten Adreßbereich wird eine Teilanzahl von beliebigen ersten Adressen verwendet,
d) es wird ein zweiter Adreß-Bereich vorgegeben, dessen zweite Adressen so inkrementiert sind, daß benachbarte Adressen des Speichers adressiert werden und dessen Adreßanzahl der Teilanzahl entspricht,
e) jeder zweiten Adresse wird genau eine erste Adresse zugeordnet,
f) der Zugriff auf ein erstes Adreßmerkmal erfolgt über eine zweite Adresse,
g) der Zugriff auf weitere Adreßmerkmale erfolgt über einen Offset von der zweiten Adresse.

2. Verfahren nach Anspruch 1, bei dem mindestens ein Adreß-Merkmal in einer zweiten Adresse besteht.

3. Verfahren nach einem der voranstehenden Ansprüche mit folgenden Merkmalen:
a) es wird je Zugriff mindestens eine wiederkehrende erste Folge von Merkmalen abgefragt,
b) das Vorhandensein einer zweiten Adresse in der ersten Folge wird über ein Bit angezeigt.

4. Verfahren nach einem der voranstehenden Ansprüche , bei dem die Adressen Kommunikationsteilnehmern entsprechen und bei dem die Adreß-Merkmale Merkmale von Kommunikationsverbindungen darstellen.

5. Verfahren nach einem der voranstehenden Ansprüche, bei dem die Adressen zur Steuerung von Datenpaketen einer Paketvermittlung dienen.
